# EUROPÄISCHE PATENTANMELDUNG

(11) **EP 4 008 655 A1**
(43) Veröffentlichungstag der Anmeldung: **08.06.2022**
(21) Anmeldenummer: 21211345.0
(22) Anmeldetag: 30.11.2021
(51) Int. Cl.: B65G 15/14, B65G 47/256

(54) **FÖRDEREINHEIT**

(30) Priorität: 01.12.2020 DE 102020131870
(71) Anmelder: Weber Schraubautomaten GmbH, 82515 Wolfratshausen (DE)
(72) Erfinder: HOFMANN, Markus, 82544 Egling (DE)
(74) Vertreter: Manitz Finsterwald Patent- und Rechtsanwaltspartnerschaft mbB

(57) **Zusammenfassung**

Die Erfindung betrifft eine Fördereinheit zur lagerichtigen Förderung eines Bauteils, wobei die Fördereinheit ein erstes Fördermittel und ein zu dem ersten Fördermittel separates zweites Fördermittel umfasst, welche sich jeweils zumindest annähernd parallel zueinander in einer Förderrichtung der Fördereinheit erstrecken und welche jeweils eine Förderfläche zur Auflage eines Abschnitts des Bauteils aufweisen, wobei die Förderfläche des ersten Fördermittels und die Förderfläche des zweiten Fördermittels in Förderrichtung gesehen unter einem vorbestimmten Winkel V-förmig zueinander ausgerichtet sind, und wobei die Fördereinheit einen Antrieb umfasst, welcher dazu ausgebildet ist, zur Förderung des Bauteils zumindest das erste Fördermittel ohne Richtungsänderung in Förderrichtung zu bewegen, und wobei das zweite Fördermittel, insbesondere zur lagerichtigen Ausrichtung des Bauteils, für ein Zeitintervall in einer zu der Förderrichtung entgegengesetzten Richtung und/oder mit einer zu der Geschwindigkeit des ersten Fördermittels unterschiedlichen Geschwindigkeit antreibbar ist.

## Beschreibung

Die Erfindung betrifft eine Fördereinheit zur lagerichtigen Förderung eines Bauteils.

Zur Förderung von Bauteilen sind die verschiedensten Arten von Fördereinheiten bekannt. Gemäß einer besonders einfachen Herangehensweise rutschen die Bauteile nach einem Impulsübertrag über eine Rutsche oder geführt zwischen zwei Führungsschienen schwerkraftbedingt von einem höher gelegenen Vorratsbehälter zu einem tiefer gelegenen Anwendungsort. Für die Förderung von Bauteilen in der Horizontalen oder entlang einer Steigung entgegen der Gewichtskraft werden üblicherweise sogenannte Rüttel- oder Vibrationsförderer eingesetzt, bei welchen die zu fördernden Bauteile durch geregelte Schwingungen entlang eines schwingfähig gelagerten Förderorgans, wie zum Beispiel einer Förderrinne oder zweier Förderschienen, durch eine Rüttelbewegung in Förderrichtung gefördert werden. Dabei dienen die Förderrinne oder die Förderschiene dazu, die jeweiligen Bauteile in einer Vorzugsausrichtung zu fördern, so dass möglichst alle Bauteile einheitlich ausgerichtet sind. Mit anderen Worten dienen die Förderrinne bzw. die Förderschiene zur lagerichtigen Förderung der Bauteile.

Für eine gerichtete Förderbewegung der Bauteile wird das Förderorgan asymmetrisch beschleunigt, wobei die Beschleunigung in Rückwärtsrichtung größer ist als in Förderrichtung. Aufgrund seiner Massenträgheit behält das Bauteil bei der Rückwärtsbewegung des Förderorgans seine während der Vorwärtsbewegung erlangte Position bei und es entsteht eine gerichtete Bewegung der Bauteile in Förderrichtung. Eine derartige Förderung ist nicht nur mittels linear hin- und her schwingenden Förderorganen möglich, sondern auch durch eine kreisende Bewegung des Förderorgans auf elliptischen Kreisbahnen.

Durch die schwingende oder kreisende Rüttelbewegung stoßen die Bauteile bei ihrer Förderung aneinander und/oder gegen das Förderorgan, was sowohl eine als unangenehm empfundene Geräuschentwicklung als auch eine erhöhte Schmutzentwicklung infolge von Abrieb hervorrufen kann. Überdies hat der Abrieb nicht nur zur Folge, dass Schmutz erzeugende Partikel entstehen, sondern auch die Bauteile vorzeitig verschleißen, bevor sie ihrem bestimmungsgemäßen Gebrauch zugeführt werden.

Gerade für Bauteile, wie zum Beispiel Verbindungsmittel mit empfindlichen Oberflächen bzw. Oberflächenbeschichtungen, insbesondere mit schmutzempfindlichen und/oder stoßempfindlichen Oberflächen bzw. Oberflächenbeschichtungen, sind Vibrationsförderer nur bedingt verwendbar, da sich der Abrieb auf der schmutzempfindlichen Oberfläche, wie zum Beispiel einer öligen oder fettigen oder adhäsiven Oberfläche, ablagern oder eine stoßempfindliche Oberflächenbeschichtung, wie sie beispielsweise bei fließlochformenden Verbindungsmitteln verwendet wird, infolge der Stöße abplatzen kann. In beiden Fällen kann das Verbindungsmittel im schlimmsten Fall unbrauchbar werden. Überdies lassen sich ölige oder fettige Verbindungsmittel mit bisherigen Fördereinheiten nur bedingt entlang einer Ansteigung fördern.

Es ist eine Aufgabe der Erfindung, eine Fördereinheit zu schaffen, welche die vorstehend genannten Nachteile überwindet. Insbesondere liegt der Erfindung die Aufgabe zugrunde, eine Fördereinheit zur schonenden lagerichtigen Förderung von Bauteilen zu schaffen. Eine weitere Aufgabe der Erfindung besteht darin, die Förderung von Bauteilen leiser zu gestalten.

Die Aufgaben lassen sich beispielsweise mit einer Fördereinheit zur lagerichtigen Förderung eines Bauteils lösen, wobei die Fördereinheit ein erstes Fördermittel und ein zu dem ersten Fördermittel separates zweites Fördermittel umfasst, welche sich jeweils zumindest annähernd parallel zueinander in einer Förderrichtung der Fördereinheit erstrecken und welche jeweils eine Förderfläche zur Auflage eines Abschnitts des Bauteils aufweisen, wobei die Förderfläche des ersten Fördermittels und die Förderfläche des zweiten Fördermittels in Förderrichtung gesehen unter einem vorbestimmten Winkel V-förmig zueinander ausgerichtet sind, und wobei die Fördereinheit einen Antrieb umfasst, welcher dazu ausgebildet ist, zur Förderung des Bauteils zumindest das erste Fördermittel ohne Richtungsänderung in Förderrichtung zu bewegen.

Konkret ist zur Lösung der vorstehenden Aufgaben eine Fördereinheit mit den Merkmalen des Anspruchs 1 vorgesehen.

Der Erfindung liegt der allgemeine Gedanke zugrunde, ein Bauteil anstelle von einem stoßinduzierenden schwingenden oder kreisenden Förderorgan, welches sich sowohl in Förderrichtung als auch in Gegenrichtung bewegt, mittels eines sich zur Förderung des Bauteils nur in Förderrichtung bewegenden Fördermittels ohne eine periodische hin- und hergehende Bewegung auf sanftere Weise abriebsfrei oder zumindest abriebsarm zu fördern. Da aufgrund der schonenderen Förderung weniger bis kein Abrieb entsteht, können vorteilhafterweise Wartungs- oder Reinigungsintervalle größer ausfallen und der Austausch von Verschleißteilen der Fördereinheit reduziert werden. Überdies ist eine abriebsarme oder bestenfalls abriebsfreie Förderung von Bauteilen mit empfindlicher Oberfläche, wie zum Beispiel mit öliger, fettiger oder adhäsiver Oberfläche, möglich, da keine oder allenfalls vernachlässigbare Ablagerungen von Verunreinigungen auf den empfindlichen Oberflächen zu befürchten sind.

Durch den Verzicht auf ein stoßinduzierendes schwingendes oder kreisendes Förderorgan zur Förderung der Bauteile ergibt sich überdies der Vorteil, dass eine leisere Förderung der Bauteile möglich ist, da die Bauteile nicht oder nicht nennenswert gegen das Förderorgan oder gegeneinander schlagen.

Die Erfindung fußt außerdem auf dem Gedanken, dass die Förderflächen der Fördermittel aufgrund ihrer V-förmigen Ausrichtung zwischen den Schenkeln des V ein Potentialminium für die zu fördernden Bauteile ausbilden. Während ihrer Förderung können die Bauteile in dem Potentialminium eine energetisch günstige Lage einnehmen. Da für identische Bauteile zu erwarten ist, dass diese stets dieselbe energetisch günstige Lage einnehmen, erfahren die Bauteile im Idealfall stets die gleiche, d.h. eine einheitliche Ausrichtung, wodurch sich die Bauteile lagerichtig in Förderrichtung fördern lassen.

Indem sich das erste Fördermittel und das zweite Fördermittel zeitweise in entgegengesetzte Richtungen bewegen, wirken besonders hohe Scherkräfte auf noch nicht korrekt lagerichtig ausgerichtete Bauteile. Die Bauteile können durch eine, durch die Scherkräfte hervorgerufene, Drehbewegung ausgerichtet werden und so eine energetisch günstigere Lage einnehmen. Somit ist es durch eine zeitweilige entgegengesetzte Bewegung der Fördermittel möglich, die zu fördernden Bauteile lagerichtig auszurichten.

Bei der Bewegung der Fördermittel mit unterschiedlichen Geschwindigkeiten ist es insbesondere denkbar, dass eines der Fördermittel zeitweise gestoppt wird, d.h. mit einer Geschwindigkeit von null betrieben wird.

Eine V-förmige Ausrichtung der Förderflächen liegt auch dann vor, wenn zwischen dem ersten Fördermittel und dem zweiten Fördermittel ein Spalt ausgebildet ist, d.h. wenn die Schenkel des V durch einen Spalt separiert sind.

Es versteht sich, dass grundsätzlich eine Förderung der Bauteile in einer zur allgemeinen Förderrichtung entgegengesetzten Richtung möglich ist, z.B. indem der Antrieb in einer zu der allgemeinen Förderrichtung entgegengesetzten Richtung betrieben wird, wobei dann die Gegenrichtung als Förderrichtung anzusehen ist.

Vorteilhafte Ausbildungen der Erfindung sind den Unteransprüchen, der Beschreibung und den Zeichnungen zu entnehmen.

Eine V-förmige Ausrichtung der Förderflächen des ersten und zweiten Fördermittels wird vorzugsweise dadurch erreicht, dass die Förderflächen unter einem Winkel von größer 0° und kleiner 180° zueinander ausgerichtet sind. An dieser Stelle sei angemerkt, dass sich der Winkel zwischen den Förderflächen des ersten Fördermittels und des zweiten Fördermittels in Förderrichtung ändern kann. Zum Beispiel kann der Winkel zwischen den Förderflächen in Förderrichtung kleiner werden. Durch die Abnahme des Winkels zwischen den Förderflächen sind die Förderflächen steiler zueinander geneigt, so dass ein Bauteil leichter in Richtung seiner energetisch günstigen Position rutschen kann. Es ist aber auch denkbar, dass der Winkel zwischen den Förderflächen der Fördermittel in Förderrichtung größer werden kann.

Vorzugsweise sind die einzelnen Förderflächen der Fördermittel zumindest annähernd plan ausgestaltet. Grundsätzlich ist es aber auch denkbar, dass mindestens eine der Förderflächen in Förderrichtung gesehen konvex oder konkav gewölbt sein kann. Überdies ist auch denkbar, dass je nach Anwendungsfall die Förderflächen der ersten und zweiten Fördermittel unterschiedlich ausgestaltet sein können. So ist es beispielsweise möglich, dass die Förderfläche des ersten Fördermittels konkav oder plan und die Förderfläche des zweiten Fördermittels entsprechend plan oder konvex ausgestaltet sein kann. Auch besteht die Möglichkeit, dass die Förderfläche des ersten Fördermittels konvex oder plan und die Förderfläche des zweiten Fördermittels entsprechend plan oder konkav ausgestaltet sein kann.

Gemäß einer besonders einfach gestalteten Alternative zu der in Anspruch 1 definierten Lösung kann nur das erste Fördermittel mit einem Antrieb zum Antreiben des ersten Fördermittels versehen sein, wobei das zweite Fördermittel starr ist. Mit anderen Worten ist das zweite Fördermittel ohne Antrieb, d.h. passiv, ausgestaltet. Die Bauteile werden dabei durch das erste Fördermittel angetrieben und entlang des nicht angetriebenen zweiten Fördermittels geführt. Das zweite Fördermittel kann dabei beispielsweise in Form einer Führungsschiene ausgestaltet sein.

Für eine besonders gleichmäßige sowie abriebsarme oder bestenfalls abriebslose Förderung der Bauteile können sowohl das erste Fördermittel als auch das zweite Fördermittel angetrieben sein. Hierfür kann der Antrieb des ersten Fördermittels zusätzlich auch dem zweiten Fördermittel zugeordnet sein, beispielsweise mittels eines Überlagerungslenkgetriebes. Der Antrieb treibt dann sowohl das erste Fördermittel als auch das zweite Fördermittel an. Mit anderen Worten weisen das erste Fördermittel und das zweite Fördermittel einen gemeinsamen Antrieb auf. Hierdurch ergibt sich der Vorteil, dass das erste Fördermittel und das zweite Fördermittel auf einfache Weise synchron antreibbar sind. Der Antrieb dient vorzugsweise auch dazu, das zweite Fördermittel zeitweise in einer Richtung entgegengesetzt zur Förderrichtung und/oder mit einer zu der Geschwindigkeit des ersten Fördermittels unterschiedlichen Geschwindigkeit anzutreiben, um beispielsweise ein noch nicht lagerichtig ausgerichtetes Bauteil lagerichtig auszurichten.

Alternativ kann das zweite Fördermittel aber auch einen zu dem Antrieb des ersten Fördermittels separaten Antrieb aufweisen. Der Antrieb des zweiten Fördermittels ist dann dazu ausgebildet, nur das zweite Fördermittel anzutreiben. Mit anderen Worten weisen das erste Fördermittel und das zweite Fördermittel jeweils einen eigenen Antrieb auf. Vorteilhafterweise sind der Antrieb des ersten Fördermittels und der Antrieb des zweiten Fördermittels miteinander synchronisiert, wodurch eine gleichmäßige Förderung der Bauteile möglich ist. Grundsätzlich kann der oder jeder Antrieb als monodirektionaler Antrieb ausgestaltet sein.

Ebenso wie der Antrieb des ersten Fördermittels kann der Antrieb des zweiten Fördermittels dazu ausgebildet sein, zur Förderung des Bauteils das zweite Fördermittel ohne Richtungsänderung in Förderrichtung zu bewegen. Der Antrieb kann zudem dazu ausgebildet sein, das zweite Fördermittel für ein, insbesondere vorgebbares, Zeitintervall in einer zu der Förderrichtung entgegengesetzten Richtung zu bewegen. Indem sich das erste Fördermittel und das zweite Fördermittel zeitweise in entgegengesetzte Richtungen bewegen, wirken besonders hohe Scherkräfte auf noch nicht korrekt lagerichtig ausgerichtete Bauteile. Die Bauteile können durch eine, durch die Scherkräfte hervorgerufene, Drehbewegung ausgerichtet werden und so eine energetisch günstigere Lage einnehmen. Somit ist es durch eine zeitweilige entgegengesetzte Bewegung der Fördermittel möglich, die zu fördernden Bauteile lagerichtig auszurichten.

Damit der Antrieb des zweiten Fördermittels das zweite Fördermittel in der zu der Förderrichtung entgegengesetzten Richtung bewegen kann, ist der Antrieb des zweiten Fördermittels vorteilhafterweise als bidirektionaler Antrieb ausgebildet.

Eine Ausrichtung von noch nicht korrekt ausgerichteten Bauteilen ist beispielsweise aber auch möglich, indem die Fördermittel mit unterschiedlichen Geschwindigkeiten bewegt werden. Dabei ist es insbesondere auch denkbar, dass eines der Fördermittel zeitweise gestoppt wird, d.h. mit einer Geschwindigkeit von null betrieben wird.

Vorzugsweise umfasst mindestens eines der Fördermittel ein Förderband, insbesondere ein Endlosförderband, eine Förderkette, mindestens eine Rolle oder Walze, ein Luftkissen oder ein magnetisches Wanderfeld.

Das Förderband, die Rolle oder der Walze lassen sich jeweils besonders einfach mittels eines Antriebs antreiben. Bei der Verwendung von Rollen oder Walzen als Fördermittel kann vorgesehen sein, dass mehrere Rollen und/oder mehrere Walzen in Förderrichtung hintereinander angeordnet sind. Dabei können mehrere Rollen bzw. Walzen jeweils mittels eines eigenen Antriebs angetrieben sein. Es ist aber auch denkbar, dass nur eine Rolle bzw. Walze, insbesondere eine in Förderrichtung am Anfang angeordnete Rolle oder Walze, mittels eines Antriebs angetrieben wird. Außerdem ist es denkbar, dass mehrere Rollen oder Walzen mittels eines Antriebsübertragungsmittels, wie zum Beispiel einer Kette oder Ritzel, miteinander angetrieben werden.

Zur Verringerung einer Kontaktfläche zwischen den jeweiligen Fördermitteln und den Bauteilen kann mindestens ein Fördermittel auf seiner Förderfläche texturiert sein. Mindestens ein Fördermittel kann aber auch derart mittels regelmäßig beabstandeter Querrippen oder Aufsätze texturiert sein, dass eine äquidistant beabstandete Förderung der Bauteile möglich ist. Die Aufsätze können austauschbar sein und beispielsweise durch ein 3D-Druckverfahren an individuelle Gegebenheiten angepasst werden.

Des Weiteren kann vorgesehen sein, dass die Förderfläche des ersten Fördermittels und die Förderfläche des zweiten Fördermittels unterschiedliche Oberflächenbeschaffenheiten aufweisen. Beispielsweise können die Förderfläche des ersten Fördermittels und die Förderfläche des zweiten Fördermittels unterschiedlich strukturiert oder unterschiedlich rau sein. Zusätzlich oder alternativ können das erste Fördermittel und das zweite Fördermittel aus unterschiedlichen Materialien bestehen. Vorzugsweise bestehen das erste Fördermittel und das zweite Fördermittel aus unterschiedlich weichen Materialien. Gemäß einer besonders vorteilhaften Ausgestaltung können das Material des ersten Fördermittels und das Material des zweiten Fördermittels unterschiedliche Reibungskoeffizienten bezüglich des Materials des zu fördernden Bauteils aufweisen. Insgesamt wird durch die unterschiedliche Beschaffenheit des ersten Fördermittels und des zweiten Fördermittels erreicht, dass das zu fördernde Bauteil von den Fördermitteln infolge unterschiedlicher Reibung unterschiedlich stark beaufschlagt wird, wodurch insbesondere auf noch nicht korrekt lagerichtig ausgerichtete Bauteile besonders hohe Scherkräfte wirken. Die Bauteile können durch eine, durch die Scherkräfte hervorgerufene, Drehbewegung ausgerichtet werden und so eine energetisch günstigere Lage einnehmen.

Grundsätzlich können die Förderfläche des ersten Fördermittels und die Förderfläche des zweiten Fördermittels jeweils eine reibungserhöhende Oberfläche aufweisen, damit das Bauteil bezüglich der Horizontalen aufwärts oder abwärts transportiert werden kann. Dabei kann vorgesehen sein, dass der Reibungskoeffizient zwischen dem Bauteil und dem jeweiligen Fördermittel zumindest annähernd gleich ist. Alternativ kann der Reibungskoeffizient zwischen dem Bauteil und dem ersten Fördermittel unterschiedlich zu dem Reibungskoeffizienten zwischen dem Bauteil und dem zweiten Fördermittel sein, so dass auch bei einer aufwärts oder abwärts gerichteten Förderung ausrichtende Scherkräfte auf das Bauteil wirken. Es versteht sich, dass der Reibungskoeffizient zwischen dem zu fördernden Bauteil und den jeweiligen Fördermitteln größer ist als der Reibungswinkel, unter welchem das Bauteil bezüglich der Horizontalen aufwärts oder abwärts gefördert werden soll.

Vorteilhafterweise ist der oder jeder Antrieb als Elektromotor ausgebildet, wodurch sich das angetriebene Fördermittel besonders kostengünstig und effizient antreiben lässt.

Dient ein Magnetfeld bzw. magnetisches Wanderfeld zur Förderung des Bauteils, so kann die Fördereinheit in Form einer Magnetschwebebahn ausgestaltet sein, insbesondere wobei die Bauteile direkt mittels des Magnetfelds bzw. des magnetischen Wanderfelds gefördert werden. Bei der Ausgestaltung des Fördermittels als magnetisches Wanderfeld kann der Antrieb in Form von mindestens einem Elektromagnet ausgebildet sein. Vorteilhafterweise sind mehrere Elektromagnete in Förderrichtung hintereinander angeordnet. Bevorzugt ist das Bauteil zur Förderung mittels des magnetischen Wanderfelds aus einem magnetisierbaren Material gefertigt. Eine Förderung ist aber auch mit nicht-magnetisierbaren, elektrisch leitfähigen Bauteilen möglich, indem durch ein magnetisches Wechselfeld in dem zu fördernden Bauteil Wirbelströme hervorgerufen werden, welche eine Abstoßung von dem die Wirbelströme induzierenden Magnetfeld bewirken.

Ist das Fördermittel ein Luftkissen, bilden mehrere in Förderrichtung hintereinander angeordnete Luftdüsen den Antrieb, so dass das Bauteil auf dem durch die Luftdüsen gebildeten Luftkissen in Förderrichtung entlang schweben kann.

Da sowohl bei dem magnetischen Wanderfeld als auch bei dem Luftkissen das Bauteil funktionsbedingt nicht im physischen Kontakt mit der Fördereinheit befindet, ist die Förderfläche in diesen Fällen eine virtuelle Ebene, auf der die Bauteile im schwebenden Zustand scheinbar aufliegen.

Für eine besonders geräuscharme sowie abriebarme Förderung der Bauteile ist es vorteilhaft, wenn eine die Förderfläche bildende Außenseite des Fördermittels ein weiches bzw. elastisches Material, wie zum Beispiel ein Elastomer oder ein Gummi, aufweist. Es versteht sich, dass das weiche Material weicher sein kann als ein Material, aus welchem die Bauteile gefertigt sind oder aus welchem eine Oberflächenbeschichtung der Bauteile beschaffen ist.

Für eine besonders spurtreue Führung des Fördermittels, insbesondere des Förderbandes, des Endlosförderbandes oder der Förderkette, kann das Fördermittel auf einer von der Förderfläche abgewandten Innenseite ein Führungsmittel zur Führung, insbesondere zur seitlichen Führung, des Fördermittels aufweisen. Zu diesem Zweck kann das Fördermittel eine in Förderrichtung umlaufende U-förmige Nut aufweisen, welche mit einem in Umfangsrichtung einer Antriebswelle radial vorstehenden und komplementär ausgebildeten Zapfen zusammenwirkt. Mit anderen Worten kann das Fördermittel einen U-förmigen Querschnitt aufweisen. Alternativ kann das Fördermittel aber auch einen T-förmigen Querschnitt aufweisen, wobei die Antriebswelle dann eine entsprechend ausgestalte Nut aufweist.

Zwischen dem ersten Fördermittel und dem zweiten Fördermittel kann ein sich in Förderrichtung erstreckender Spalt ausgebildet sein. Ein sich zwischen den Fördermitteln erstreckender Spalt kommt insbesondere bei der Förderung eines einen Schaft und einen gegenüber dem Schaft verbreiterten Kopf aufweisenden Bauteils, wie zum Beispiel einem Verbindungsmittel, z.B. einer Schraube, einem Niet oder einem Bolzen, zugute. Dabei lässt sich das Bauteil besonders schonend fördern, indem das Bauteil mit seinem Kopf abschnittsweise auf den jeweiligen Förderflächen der Fördermittel aufliegt und der Schaft des Bauteils berührungsfrei in dem Spalt zwischen den Fördermitteln frei hängt. Hierdurch gelangt das Bauteil möglichst wenig in Kontakt mit den jeweiligen Fördermitteln, was insbesondere bei Bauteilen mit empfindlicher Oberfläche von Vorteil ist, da die Fördermittel die empfindlichen Oberflächen nur minimal berühren.

Vorteilhafterweise ist eine Breite des Spalts zwischen den Fördermitteln an den Durchmesser des Schafts des zu fördernden Bauteils angepasst oder anpassbar. Insbesondere ist die Mindestbreite des Spalts geringer als der Durchmesser des Kopfes des Bauteils. Die Breite des Spalts bemisst sich in Richtung quer zur Förderrichtung. Üblicherweise kann ein als Verbindungsmittel ausgebildetes Bauteil einen Kopfdurchmesser von 6 bis 18 mm und einen Schaftdurchmesser von 3 bis 9 mm aufweisen.

Zur variablen Einstellung der Breite des Spaltes zwischen dem ersten Fördermittel und dem zweiten Fördermittel kann ein Abstandseinstellmittel vorgesehen sein. Hierdurch lässt sich das Anwendungsspektrum der Fördereinheit erweitern, da durch die Einstellung der Spaltbreite verschieden große Bauteile bzw. Verbindungsmittel transportiert werden können. Insbesondere kann die Spaltbreite individuell an einen Durchmesser des Schafts des Verbindungsmittels bzw. Bauteils derart angepasst werden, dass der Schaft zwischen dem ersten Fördermittel und dem zweiten Fördermittel freihängend transportiert werden kann. Grundsätzlich kann die Spaltbreite aber auch derart schmal gewählt sein, dass der Schaft des Bauteils zumindest abschnittsweise auf wenigstens einer der Förderflächen des ersten Fördermittels oder des zweiten Fördermittels aufliegt.

Vorzugsweise ist ein Winkel zwischen der Förderfläche des ersten Fördermittels und der Förderfläche des zweiten Fördermittels einer Fördereinheit einstellbar. Zu diesem Zweck kann die Fördereinheit ein Winkeleinstellmittel umfassen, welches zum Einstellen eines, insbesondere vordefinierten, Winkels zwischen dem ersten Fördermittel und dem zweiten Fördermittel einer Fördereinheit vorgesehen ist. Eine V-förmige Ausrichtung der Fördermittel zueinander lässt sich mittels des Winkeleinstellmittels beispielsweise dadurch erreichen, dass wenigstens ein Fördermittel hin zu dem anderen Fördermittel geneigt wird. Der Winkel liegt in einer Ebene, welche quer, insbesondere rechtwinklig, zur Förderrichtung ausgerichtet ist.

Vorzugsweise weisen die Förderflächen der V-förmig zueinander ausgerichteten Fördermittel zumindest annähernd die gleiche Neigung gegenüber der Horizontalen auf. Es ist aber auch denkbar, dass eine Förderfläche parallel zur Horizontalen ausgerichtet ist und die andere Förderfläche zur Horizontalen geneigt ausgerichtet ist, um so eine V-förmige Ausrichtung der Förderflächen der Fördermittel zu erreichen.

Die Fördereinheit kann einen Sensor umfassen, welcher zur Erfassung einer, insbesondere nicht korrekten, Ausrichtung eines Bauteils vorgesehen ist. Der Sensor kann mit einer Aussortiereinheit gekoppelt sein, welche dazu dient, nicht korrekt ausgerichtete Bauteile auszusortieren.

Die Erfindung betrifft auch ein Fördersystem mit mindestens einer ersten Fördereinheit gemäß der vorstehend beschriebenen Art und mindestens einer in Förderrichtung nach der ersten Fördereinheit angeordneten zweiten Fördereinheit, welche mindestens ein eine Förderfläche aufweisendes Fördermittel umfasst. Es versteht sich, dass zwischen der ersten Fördereinheit und der zweiten Fördereinheit mindestens eine weitere Fördereinheit der vorstehend beschriebenen Art angeordnet sein kann.

Grundsätzlich kann das Fördersystem mindestens zwei identisch ausgestaltete Fördereinheiten umfassen. Dabei kann ein Winkel zwischen den Förderflächen des ersten Fördermittels und des zweiten Fördermittels der zweiten Fördereinheit zumindest annähernd gleich groß sein, wie ein Winkel zwischen den Förderflächen des ersten Fördermittels und des zweiten Fördermittels der ersten Fördereinheit. Es ist aber auch denkbar, dass das Fördersystem unterschiedliche Fördereinheiten aufweisen kann. Insbesondere kann die zweite Fördereinheit gemäß der vorstehend beschriebenen Art ausgestaltet sein, sich jedoch von der ersten Fördereinheit darin unterscheiden, dass ein Winkel zwischen den Förderflächen des ersten Fördermittels und des zweiten Fördermittels der zweiten Fördereinheit unterschiedlich zu dem Winkel ist, welcher zwischen den Förderflächen des ersten Fördermittels und des zweiten Fördermittels der ersten Fördereinheit ausgebildet ist. Insbesondere kann der Winkel zwischen den Förderflächen der Fördermittel der zweiten Fördereinheit größer sein als der Winkel zwischen den Förderflächen der Fördermittel der ersten Fördereinheit. Besonders bevorzugt beträgt der Winkel zwischen den Förderflächen der Fördermittel der zweiten Fördereinheit zumindest annähernd 180°, so dass die Förderflächen der Fördermittel der zweiten Fördereinheit anders als die Förderflächen der Fördermittel der ersten Fördereinheit in einer gemeinsamen Ebene zumindest annähernd koplanar zueinander angeordnet sind. Hierdurch können die Verbindungsmittel besonders stabil aufliegend mittels der zweiten Fördereinheit transportiert werden. Vorzugsweise ist die Ebene, in welcher die beiden Förderflächen koplanar liegen, zumindest annähernd parallel zur Horizontalen ausgerichtet.

Grundsätzlich kann der Winkel zwischen den Fördermitteln der zweiten Fördereinheit auch kleiner sein, wenn die Bauteile einen möglichst geringen Kontakt zu den Fördermitteln aufweisen sollen, beispielsweise wenn die Bauteile eine ölige, fettige oder adhäsive Oberfläche aufweisen.

Das Fördersystem dient vorzugsweise dazu, Bauteile vorsortiert und vorausgerichtet einem Bestimmungsort zuzuführen. Beispielsweise kann das Fördersystem dazu dienen, Verbindungsmittel einem Schraubautomaten zuzuführen. Alternativ dazu kann das Fördersystem dazu dienen, Deckel einer Verpackungsmaschine zuzuführen.

Zum Aussortieren von nicht lagerichtig ausgerichteten Bauteilen kann der Sensor zur Erfassung der Ausrichtung der Bauteile in Förderrichtung gesehen zwischen einem Endbereich der ersten Fördereinheit und einem vorderen Bereich der zweiten Fördereinheit angeordnet sein. Speziell kann der Sensor zwischen der ersten Fördereinheit und der zweiten Fördereinheit angeordnet sein.

Bei einem solchen Aussortieren der Bauteile dient die erste Fördereinheit im Wesentlichen dazu, wahllos bzw. zufällig ausgerichtete Bauteile der zweiten Fördereinheit zuzuführen. Der Sensor erkennt unter den wahllos ausgerichteten Bauteilen die nicht korrekt ausgerichteten Bauteile. Die Aussortiereinheit kann dabei dazu dienen, in Ansprechen auf ein Signal von dem Sensor, zum Beispiel, wenn der Sensor ein nicht korrekt ausgerichtetes Bauteil erkannt hat, nicht korrekt ausgerichtete Bauteile auszusortieren. Letztlich gelangen so nur korrekt ausgerichtete Bauteile zu der zweiten Fördereinheit. Mit anderen Worten ist der Sensor mit der Aussortiereinheit gekoppelt und wirkt vorzugsweise mit der Aussortiereinheit zur Aussortierung von nicht korrekt ausgerichteten Bauteilen zusammen. Das Aussortieren nicht korrekt ausgerichteter Bauteile kann beispielsweise durch Wegblasen mittels Druckluft erfolgen. Es ist aber auch denkbar, die inkorrekt ausgerichteten Bauteile elektromagnetisch oder mechanisch, beispielsweise mittels eines Schiebers, auszusortieren. Weisen die zu fördernden Bauteile jeweils einen Kopf und einen Schaft auf, so sind beispielsweise korrekt ausgerichtete Bauteile solche Bauteile, deren Köpfe jeweils auf den Förderflächen der Fördermittel aufliegen und deren Schäfte jeweils frei in dem Spalt hängen.

Der Sensor kann als optischer Sensor ausgebildet sein, um eine Ausrichtung der Bauteile zu erfassen. Ferner kann der Sensor mehrere Sensorelemente aufweisen, welche in Förderrichtung einen Teil einer durch die Fördermittel definierten Förderstrecke erfassen. Es ist aber auch denkbar, dass der Sensor die Ausrichtung der Bauteile nach einem anderen physikalischen Prinzip erfasst. Beispielsweise kann ein induktiver Sensor oder ein kapazitiver Sensor vorgesehen sein, um die Ausrichtung der Bauteile zu erfassen.

Das Fördersystem kann ein Vorratsbehältnis zur Bevorratung der Bauteile aufweisen. Das Vorratsbehältnis kann nicht nur zur Bevorratung der Bauteile dienen, sondern auch zur Aufnahme von aussortierten Bauteilen, d.h. von Bauteilen, welche mittels der Aussortiereinheit aussortiert wurden. Zu diesem Zweck kann das Vorratsbehältnis unterhalb der Aussortiereinheit angeordnet sein. Hierdurch können die aussortierten Bauteile auf einfache und kostengünstige Weise schwerkraftbedingt in das Vorratsbehältnis fallen. Je nach Anwendungsfall kann eine innerhalb des Vorratsbehältnisses vorgesehene Auffangfläche mit einem weichen Material ausgekleidet sein, damit Bauteile mit stoßempfindlicher Oberfläche beim Auftreffen auf die Auffangfläche keinen Schaden nehmen.

Damit die Bauteile aus dem Vorratsbehältnis der ersten Fördereinheit zugeführt werden können, kann das Fördersystem einen Zuführmechanismus zur Zuführung der Bauteile aus dem Vorratsbehältnis zu der ersten Fördereinheit aufweisen. Ist das Vorratsbehältnis unterhalb der Fördereinheit angeordnet und bildet somit gewissermaßen eine Senke aus, so kann der Zuführmechanismus beispielsweise als Steigförderer ausgebildet sein. Vorzugsweise weist der Steigförderer ein Förderband aus einem weichen Material auf, um hierdurch eine verschleißfreie Zuführung der Bauteile zu der ersten Fördereinheit zu ermöglichen. Grundsätzlich sind aber auch andere Zuführmechanismen denkbar, beispielsweise auf der Grundlage von Druckluft. So können beispielsweise bei einem Zuführmechanismus in Form eines Stufenförderers mittels Druckluft oder mittels eines Elektromotors verschiebbare Schiebeplatten dazu dienen, Bauteile der ersten Fördereinheit zuzuführen.

Das Fördersystem kann ferner ein Steuermodul zur Steuerung eines Antriebs der zweiten Fördereinheit in Abhängigkeit von einem Antrieb der ersten Fördereinheit umfassen. Hierdurch lässt sich durch gezieltes Takten des Antriebs der ersten und/oder zweiten Fördereinheit eine äquidistante Beabstandung der geförderten Bauteile erreichen. Beispielsweise kann durch geeignete Taktung eine Taktzeit bei der Zuführung der Bauteile zu einem Anwendungsort eingehalten werden. Eine derartige Einhaltung der Taktzeit ist insbesondere beim Setzvorgang oder Fügevorgang von Verbindungsmitteln vorteilhaft, wodurch sich die Prozesssicherheit erhöht. Überdies können die erste Fördereinheit zur Vorsortierung der Bauteile und die zweite Fördereinheit zur Pufferung korrekt ausgerichteter Bauteile dienen. Grundsätzlich können die Bauteile aber nicht nur äquidistant, sondern auch unregelmäßig beabstandet gefördert werden.

Wie bereits erwähnt ist die Förderung von Bauteilen mittels der erfindungsgemäßen Fördereinheit besonders leise, so dass vorteilhafterweise auf eine Schallschutzverschalung verzichtet werden kann. Hierdurch ergibt sich außerdem der Vorteil, dass ohne Schallschutzverschalung ein Setzroboter hindernisfrei auf die geförderten Bauteile zugreifen kann. Dabei können die Abstände zwischen den Bauteilen so gewählt sein, dass ein Greifer des Setzroboters leicht zwischen die Bauteile greifen kann, um hierdurch ein Bauteil aufzunehmen.

Das Fördersystem kann außerdem eine Vereinzelungseinheit aufweisen, welche zur Vereinzelung der Bauteile dient. Alternativ kann eine Vereinzelungseinheit dem Fördersystem nachgeschaltet sein.

Gemäß dieser Offenbarung ist auch die Verwendung einer Fördereinheit oder eines Fördersystems zur Förderung eines, insbesondere einen Schaft und einen bezüglich des Schaftes verbreiterten Kopf aufweisenden, Bauteils, insbesondere Verbindungsmittels, vorgesehen.

Die Erfindung betrifft außerdem ein Verfahren zur lagerichtigen Förderung eines Bauteils mittels einer Fördereinheit. Das Verfahren umfasst die folgenden Schritte:
- Zuführung des Bauteils zu der Fördereinheit, wobei das Bauteil eine energetisch günstige Position einnimmt, indem ein erster Abschnitt des Bauteils mit einer Förderfläche eines ersten Fördermittels der Fördereinheit und ein zweiter Abschnitt des Bauteils mit einer Förderfläche eines zweiten Fördermittels der Fördereinheit zur Anlage gelangt, und
- Förderung des Bauteils in Förderrichtung durch Antreiben zumindest des ersten Fördermittels mittels eines Antriebs
- wobei das erste Fördermittel in Förderrichtung angetrieben wird und das zweite Fördermittel zeitweise in einer Richtung entgegengesetzt zur Förderrichtung und/oder mit einer zu der Geschwindigkeit des ersten Fördermittels unterschiedlichen Geschwindigkeit angetrieben wird, um ein noch nicht lagerichtig ausgerichtetes Bauteil lagerichtig auszurichten.

Vorzugsweise wird die Zuführung des Bauteils zu der Fördereinheit mittels eines Stufenförderers bewirkt.

Mit dem Verfahren lassen sich allgemein Bauteile fördern, welche vorzugsweise einen Schaft und einen bezüglich des Schafts verbreiterten Kopf aufweisen. Im Speziellen dient das Verfahren dazu, ein Verbindungsmittel, insbesondere eine Schraube oder einen Deckel einer Verpackung, insbesondere einen Stöpsel einer Brausetablettenröhre zu fördern.

Nachfolgend wird die Erfindung rein beispielhaft anhand möglicher Ausführungsformen unter Bezugnahme auf die Zeichnungen beschrieben. Es zeigen:
- Fig. 1: eine perspektivische Ansicht einer ersten Ausführungsform eines Fördersystems mit einer ersten Fördereinheit und einer zweiten Fördereinheit;
- Fig. 2: eine Draufsicht auf das Fördersystem von Fig. 1;
- Fig. 3: eine Schnittansicht entlang der Schnittebene A-A von Fig. 2; und
- Fig. 4: eine perspektivische Ansicht einer zweiten Ausführungsform eines Fördersystems mit einer ersten Fördereinheit und einer zweiten Fördereinheit.

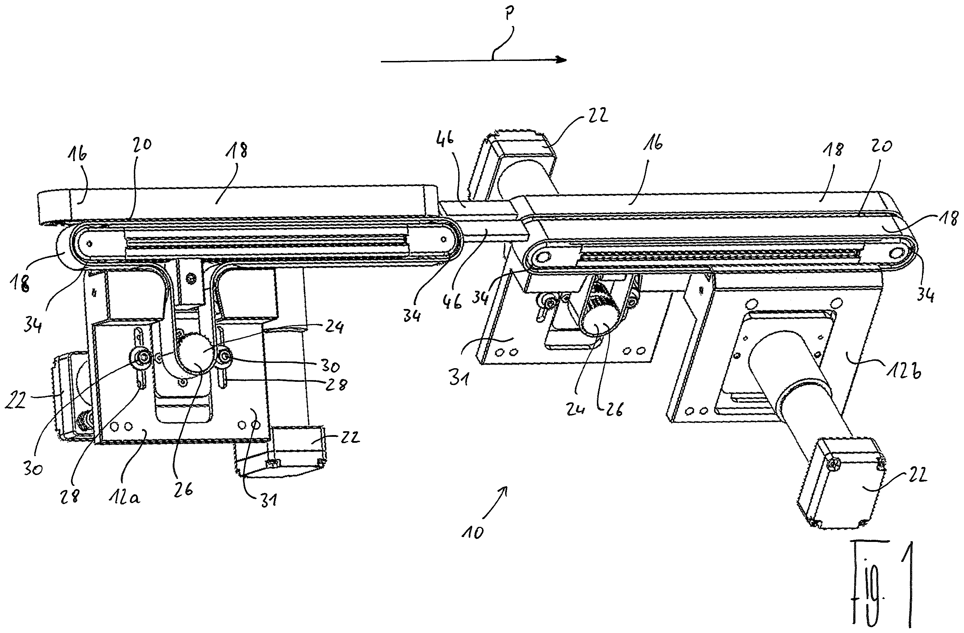

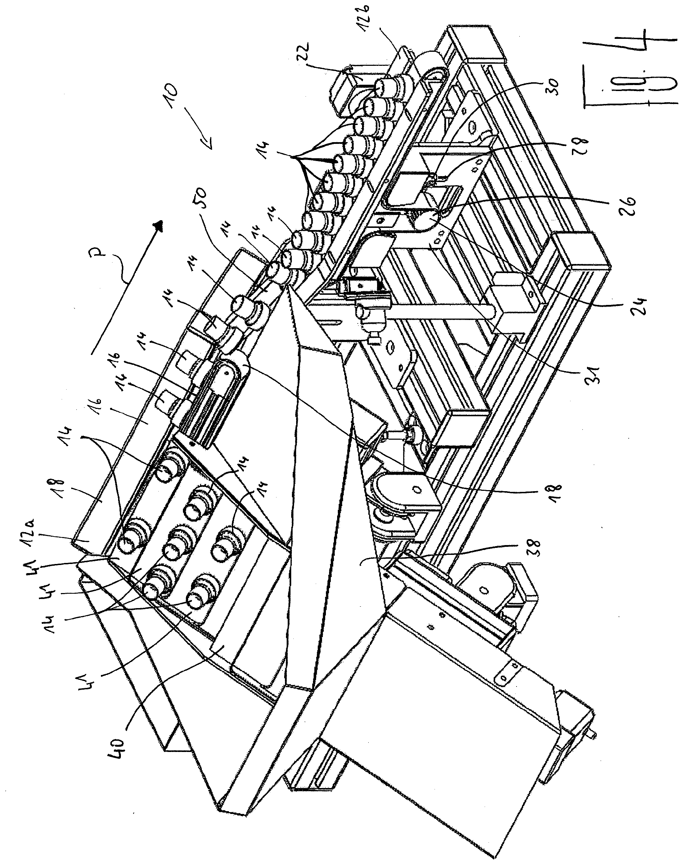

Die Zeichnungen zeigen verschiedene Ansichten eines Fördersystems 10 mit einer ersten Fördereinheit 12a und einer in Förderrichtung (Pfeil P) nach der ersten Fördereinheit 12a angeordneten zweiten Fördereinheit 12b. Dabei zeigen Fig. 1 bis 3 ein Fördersystem 10 gemäß einer ersten Ausführungsform und Fig. 4 ein Fördersystem 10 gemäß einer zweiten Ausführungsform.

Die in den Zeichnungen dargestellten Fördersysteme 10 sowie die jeweiligen Fördereinheiten 12a, 12b werden im Allgemeinen zur lagerichtigen Förderung von Bauteilen 14 verwendet. Im Speziellen dienen die Fördersysteme 10 der vorliegenden Ausführungsbeispiele zur Förderung von Bauteilen 14, welche jeweils einen Schaft und einen bezüglich des Schafts verbreiterten Kopf aufweisen. Mit anderen Worten sind die zu fördernden Bauteile 14 T-förmig ausgebildet.

Konkret dient das in Fig. 1 bis 3 dargestellte Fördersystem 10 gemäß der ersten Ausführungsform zur Förderung von T-förmigen Verbindungsmitteln 14 in Förderrichtung P. Insbesondere dient das Fördersystem 10 gemäß der ersten Ausführungsform zur Förderung von Verbindungsmitteln 14 mit einer empfindlichen Oberfläche oder einer empfindlichen Oberflächenbeschichtung. Eine empfindliche Oberfläche kann beispielsweise bei öligen, fettigen oder adhäsiven Verbindungsmitteln 14 vorliegen, wobei die Verbindungsmittel 14 aufgrund der öligen, fettigen oder adhäsiven Beschichtung besonders schmutzempfindlich sind. Eine empfindliche Oberfläche kann aber auch bei Verbindungsmitteln 14 vorliegen, welche für fließlochformende Anwendungen eine besonders abrasive oder spröde Oberflächenbeschichtung aufweisen, wodurch die Verbindungsmittel 14 besonders stoßempfindlich sind.

Das in Fig. 4 gezeigte Fördersystem 10 gemäß der zweiten Ausführungsform dient konkret zur Förderung von T-förmigen Stöpseln 14 in der Förderrichtung P. Die Stöpsel 14 können beispielsweise zum Verschließen von nicht weiter dargestellten Brausetablettenröhrchen verwendet werden.

Nachfolgend wird nun das Fördersystem 10 gemäß der ersten Ausführungsform beschrieben. Das Fördersystem 10 gemäß der ersten Ausführungsform umfasst zwei Fördereinheiten 12a, 12b. Jede der Fördereinheiten 12a, 12b umfasst zwei jeweils eine Förderfläche 16 aufweisende Fördermittel 18. In dem dargestellten Ausführungsbeispiel ist jedes Fördermittel 18 in Form eines Förderbands bzw. genauer gesagt in Form eines Endlosförderbands ausgebildet. Das Fördermittel 18 kann aber auch andersartig ausgebildet sein, beispielsweise in Form einer Förderkette. Auch ist denkbar, dass das Fördermittel 18 eine oder mehrere in Förderrichtung P hintereinander angeordnete Walzen umfassen kann. Überdies kann das Fördermittel 18 ein magnetisches Wanderfeld oder ein Luftkissen sein, so dass die entsprechende Fördereinheit 12a, 12b eine Magnetschwebebahn bzw. eine Luftkissenbahn bildet. Grundsätzlich kann aber auch ein Fördermittel 18 starr ausgebildet sein, zum Beispiel in Form einer nicht angetriebenen, d.h. passiven, Führungsschiene.

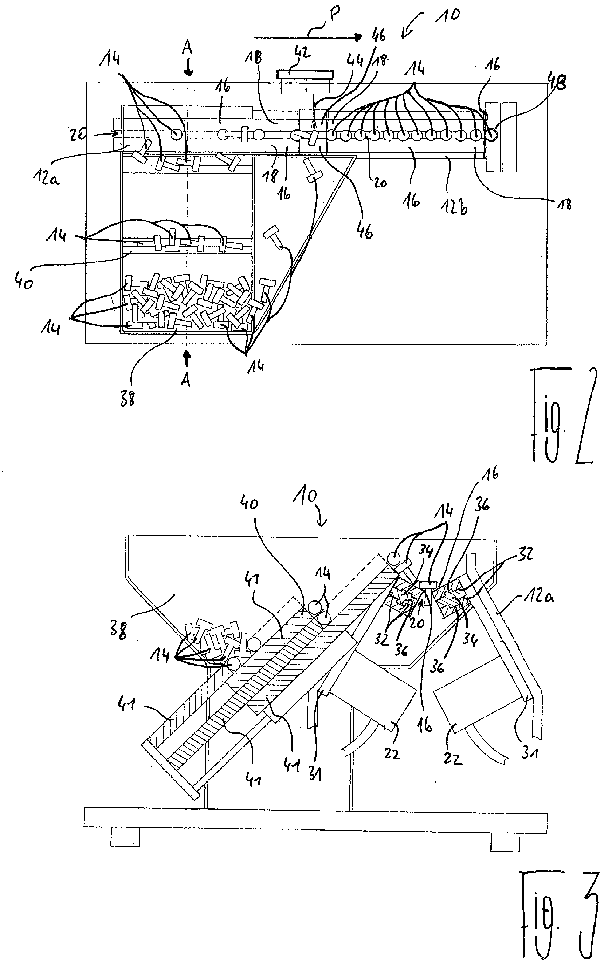

Wie anhand von Fig. 1 und 2 ersichtlich ist, sind das erste Fördermittel 18 und das zweite Fördermittel 18 einer Fördereinheit 12a, 12b in Förderrichtung P zumindest annähernd parallel zueinander ausgerichtet, wobei sich das erste Fördermittel 18 und das zweite Fördermittel 18 jeweils in Förderrichtung P erstrecken. Überdies ist zwischen dem ersten Fördermittel 18 und dem zweiten Fördermittel 18 ein sich ebenfalls in Förderrichtung P erstreckender Spalt 20 ausgebildet.

Die Fördermittel 18 definieren jeweils eine Förderfläche 16, auf welcher die Köpfe der Verbindungsmittel 14 zumindest abschnittsweise aufliegen, wobei der Spalt 20 zur Aufnahme der jeweiligen Schäfte der Verbindungsmittel 14 dient. Ein in den Figuren nicht dargestelltes Abstandseinstellmittel kann dazu vorgesehen sein, eine sich quer zur Förderrichtung P erstreckende Breite des Spaltes 20 zwischen dem ersten Fördermittel 18 und dem zweiten Fördermittel 18 einzustellen.

In dem vorliegenden Ausführungsbeispiel ist jedes Fördermittel 18 mittels eines Antriebs 22 in Förderrichtung P antreibbar. Somit umfasst jede Fördereinheit 12a, 12b jeweils zwei Antriebe 22, wobei die Antriebe 22 einer Fördereinheit 12a, 12b jeweils miteinander synchronisiert sind, um so eine einheitliche und gleichmäßige Förderung der Verbindungsmittel 14 in Förderrichtung P zu ermöglichen. Grundsätzlich können die beiden Fördermittel 18 einer Fördereinheit 12a, 12b zum selben Zweck aber auch mittels eines einzigen gemeinsamen Antriebs angetrieben werden. In dem vorliegenden Ausführungsbeispiel sind die Antriebe 22 jeweils als Elektromotor ausgebildet.

In einem Fördermodus sind der dem ersten Fördermittel 18 zugeordnete Antrieb 22 und der dem zweiten Fördermittel 18 zugeordnete Antrieb 22 dazu ausgebildet, das jeweilige Fördermittel 18 ohne Richtungsänderung in Förderrichtung P zu bewegen. Grundsätzlich ist es aber auch möglich, dass der dem ersten Fördermittel 18 zugeordnete Antrieb 22 das Fördermittel 18 in Förderrichtung P bewegt, wohingegen der dem zweiten Fördermittel 18 zugeordnete Antrieb 22 das zweite Fördermittel 18 für ein Zeitintervall in einer zu der Förderrichtung P entgegengesetzten Richtung bewegt. Hierdurch lässt sich das zu fördernde Bauteil 14 lagerichtig ausrichten, wie nachfolgend noch genauer erläutert wird.

Die Antriebe 22 umfassen jeweils einen an der Antriebswelle 24 ausgebildeten und um eine Antriebsachse drehbaren Antriebskopf 26. Der Antriebskopf 26 steht mit einer der Förderfläche 16 abgewandten Innenseite des Fördermittels 18 in Wirkeingriff, um bei Betätigung des Antriebs 22 durch Rotation des Antriebskopfs 26 das Fördermittel 18 in Förderrichtung P anzutreiben.

Die Antriebe 22 sind jeweils mittels in Führungsschlitzen 28 gelagerten Befestigungselementen 30 an einem das jeweilige Führungsmittel 18 lagernden Unterbau 31 befestigt. In dem vorliegenden Ausführungsbeispiel dienen zwei Befestigungselemente 30 zur Befestigung eines Antriebs 22 an dem entsprechenden Unterbau 31. Grundsätzlich können die Antriebe 22 jeweils auch mit weniger als zwei oder mehr als zwei Befestigungselementen 30 an dem jeweiligen Unterbau 31 befestigt sein. Überdies ist die Aufnahme der Befestigungselemente 30 in Führungsschlitzen 28 nicht zwingend erforderlich. Alternativ können die Befestigungselemente 30 auch in dafür vorgesehenen Rundbohrungen aufgenommen sein. Mit Hilfe der Führungsschlitze 28 lässt sich jedoch der entsprechende Antrieb 22 aufgrund der zur Förderrichtung P rechtwinkligen Ausrichtung der Führungsschlitze 28 in einer Ebene senkrecht zur Antriebsachse des Antriebs 22 durch Lockerung der Befestigungselemente 30 verlagern. Durch eine derartige Verlagerung des Antriebs 22 und anschließendes Festziehen der Befestigungselemente 30 lässt sich das Fördermittel 18 straffen. Zu diesem Zweck ist das Fördermittel 18 senkrecht zur Förderrichtung P zu dem Antriebskopf 26 umgelenkt (Fig. 1), so dass durch Verlagerung des Antriebs 22 in Richtung von der Förderfläche weg eine Straffung des Fördermittels 18 erfolgt.

Wie anhand der Querschnittansicht von Fig. 3 hervorgeht, weisen die Fördermittel 18 jeweils auf ihrer Innenseite Führungsmittel 32 zur seitlichen Führung des Fördermittels 18 auf. Die Führungsmittel 32 weisen ein zur Innenseite gerichtetes, U-förmiges Querschnittsprofil auf. Es versteht sich, dass der Antriebskopf 26 des entsprechenden Antriebs 22 komplementär zu dem Profil der Innenseite des Fördermittels 18 ausgestaltet sein kann. In entsprechender Weise können auch Führungsrollen 34 zur Führung der Fördermittel 18 entsprechend komplementär ausgebildet sein. In dem vorliegenden Ausführungsbeispiel bedeutet das, dass der Antriebskopf 26 sowie die Führungsrollen 34 einen zu dem U-förmigen Querschnittsprofil des Fördermittels 18 jeweils komplementär ausgestalteten Fortsatz 36 aufweisen, welcher in das U-förmige Querschnittsprofil des Fördermittels 18 eingreift.

Wie Fig. 1 erkennen lässt, sind die jeweiligen Förderflächen 16 des ersten Fördermittels 18 und des zweiten Fördermittels 18 der ersten Fördereinheit 12a unter einem vorbestimmten ersten Winkel zueinander angeordnet und die Förderflächen 16 des ersten Fördermittels 18 und des zweiten Fördermittels 18 der zweiten Fördereinheit 12b unter einem von dem ersten Winkel abweichenden zweiten Winkel zueinander angeordnet. Insbesondere ist dabei der erste Winkel kleiner als der zweite Winkel. In dem vorliegenden Ausführungsbeispiel ist der erste Winkel kleiner als 180° und der zweite Winkel beträgt zumindest annähernd 180°. Mit anderen Worten sind die Förderflächen 16 der Fördermittel 18 der ersten Fördereinheit 12a V-förmig zueinander ausgerichtet, wohingegen die Förderflächen der Fördermittel 18 der zweiten Fördereinheit 12b koplanar in einer Ebene liegen, welche zumindest annähernd parallel zur Horizontalen ausgerichtet ist. Grundsätzlich können der erste Winkel und der zweite Winkel aber auch zumindest annähernd gleich groß sein.

Indem die Förderflächen 16 der Fördermittel 18 V-förmig zueinander ausgerichtet sind, bilden die Förderflächen 16 der Fördermittel 18 ein Potentialminimum für die zu fördernden Bauteile 14 und insbesondere für die T-förmigen Verbindungsmittel 14. Durch die schräge Ausrichtung der Förderflächen 16 bezüglich der Horizontalen rutschen die Verbindungsmittel 14 schwerkraftbedingt in Richtung des Potentialminiums, d.h. zu der Senke zwischen den Schenkeln des V. Dabei nimmt der zwischen den Fördermitteln 18 ausgebildete Spalt 20 den Schaft eines Verbindungsmittels 14 auf, wohingegen der im Vergleich zum Schaft breitere Kopf des Verbindungsmittels 14 ein Durchrutschen des Verbindungsmittels 14 durch den Spalt 20 verhindert. Da für identische Verbindungsmittel 14 stets dieselbe energetisch günstige Position zu erwarten ist, erfahren die Verbindungsmittel 14 somit zwischen den V-förmig zueinander ausgerichteten Förderflächen 16 der Fördermittel 18 im Idealfall stets die gleiche, d.h. eine einheitliche Ausrichtung, wodurch sich die Verbindungsmittel 14 lagerichtig in Förderrichtung P fördern lassen.

Zum Einstellen des Winkels zwischen den Förderflächen 16 des ersten Fördermittels 18 und des zweiten Fördermittels 18 können die Fördereinheiten 12a, 12b jeweils ein in den Figuren nicht dargestelltes Winkeleinstellmittel umfassen.

Die zu fördernden Verbindungsmittel 14 sind in einem Vorratsbehältnis 38 bevorratet, wobei ein Zuführmechanismus 40 dazu vorgesehen ist, die Verbindungsmittel 14 aus dem Vorratsbehältnis 38 zu der ersten Fördereinheit 12a zuzuführen (Fig. 2 und 3). In dem dargestellten Ausführungsbeispiel ist der Zuführmechanismus 40 in Form eines Stufenförderers mit mehreren verschiebbaren Schiebeplatten 41 gezeigt. Wie anhand von Fig. 2 bis 4 hervorgeht, ist der Zuführmechanismus 40 seitlich des ersten Fördermittels 18 der ersten Fördereinheit 12a angeordnet.

Zur lagerichtigen Förderung der Bauteile 14 bzw. der Verbindungsmittel 14 umfasst das Fördersystem 10 ferner einen Sensor 42 zur Erfassung der jeweiligen Ausrichtung der Verbindungsmittel 14 (Fig. 2). Wie Fig. 2 darstellt, ist der Sensor 42 in Förderrichtung P gesehen vornehmlich zwischen der ersten Fördereinheit 12a und der zweiten Fördereinheit 12b angeordnet.

Der Sensor 42 dient zur Erfassung einer korrekten Ausrichtung der Verbindungsmittel 14, so dass von der ersten Fördereinheit 12a geförderte wahllos orientierte Verbindungsmittel 14 nur diejenigen Verbindungsmittel 14 zu der zweiten Fördereinheit 12b durchgelassen werden, welche korrekt ausgerichtet sind. Eine korrekte Ausrichtung eines Verbindungsmittels 14 liegt in dem dargestellten Ausführungsbeispiel vor, wenn der Kopf des Verbindungsmittels 14 zumindest abschnittsweise auf den Förderflächen der Fördermittel 18 aufliegt und der Schaft des Verbindungsmittels 14 in dem Spalt 20 freihängt.

Damit keine inkorrekt ausgerichteten Verbindungsmittel 14 zu der zweiten Fördereinheit 12b gelangen, ist der Sensor 42 mit einer Aussortiereinheit 44 gekoppelt. Die Aussortiereinheit 44 sortiert von dem Sensor 42 als nicht korrekt ausgerichtet erfasste Verbindungsmittel 14 aus. Eine Aussortierung kann beispielsweise durch Druckluft oder mechanisch durch einen in den Figuren nicht dargestellten Schieber erfolgen, welcher die inkorrekt ausgerichteten Verbindungsmittel 14 von einer zwischen der ersten Fördereinheit 12a und der zweiten Fördereinheit 12b angeordneten Führungsbahn 46 wegschiebt, da nur die korrekt ausgerichteten Verbindungsmittel 14 in der Führungsbahn 46 geführt sind, wohingegen die inkorrekt ausgerichteten Verbindungsmittel 14 auf einer Oberfläche der Führungsbahn 46 aufliegen.

Die aussortierten Verbindungsmittel 14 werden dem Vorratsbehältnis 38 wieder zugeführt und stehen für eine weitere Zuführung zur ersten Fördereinheit 12a wieder zur Verfügung.

Zur Erhöhung des Grades an korrekt ausgerichteten Verbindungsmitteln 14 ist der dem zweiten Fördermittel 18 zugeordnete Antrieb 22 der ersten Fördereinheit 12a dazu ausgebildet, das zweite Fördermittel 18 für ein Zeitintervall in einer zu der Förderrichtung P entgegengesetzten Richtung zu bewegen. Durch die zeitweise entgegengesetzten Bewegungen des ersten Fördermittels 18 und des zweiten Fördermittels 18 wirken auf die Verbindungsmittel 14 Scherkräfte, welche zu einer Verdrehung der Verbindungsmittel 14 führen. Insbesondere bei quer zur Förderrichtung P liegenden, d.h. nicht korrekt ausgerichteten, Verbindungsmitteln 14 bewirken die Scherkräfte, dass das jeweilige Verbindungsmittel 14 derart verdreht wird, dass der Schaft des Verbindungsmittels 14 mittig zu dem Spalt 20 ausgerichtet ist, so dass der Schaft des Verbindungsmittels 14 von dem Spalt 20 aufgenommen wird und sich das Verbindungsmittel 14 insgesamt lagerichtig zwischen den Fördermitteln 18 ausrichtet. Es versteht sich, dass eine derartige Ausrichtung von Bauteilen 14 auch mit plan ausgerichteten Fördermitteln 18 funktionieren kann, z.B. mit den Fördermitteln 18 der zweiten Fördereinheit 12b.

Das Fördersystem 10 kann außerdem ein in den Figuren nicht dargestelltes Steuermodul zur Steuerung der Antriebe 22 der zweiten Fördereinheit 12b in Abhängigkeit der Antriebe 22 der ersten Fördereinheit 12a umfassen. Hierdurch wird ermöglicht, dass durch geeignete Koordination der Antriebe 22 eine äquidistante Förderung korrekt ausgerichteter Verbindungsmittel 14 möglich ist, beispielsweise indem die Fördermittel 18 der zweiten Fördereinheit 12b um eine vorbestimmte Wegstrecke weitergefördert wird, wenn ein korrekt ausgerichtetes Verbindungsmittel 14 die Führungsbahn 46 verlässt. Dabei kann die zweite Fördereinheit 12b als Puffer für die korrekt ausgerichteten Verbindungsmittel 14 dienen, bevor sie einer Vereinzelungseinheit 48 zugeführt werden (Fig. 2).

Nun bezugnehmend auf Fig. 4 wird das Fördersystem 10 gemäß der zweiten Ausführungsform beschrieben. Das Fördersystem 10 gemäß der zweiten Ausführungsform entspricht im Wesentlichen dem Fördersystem 10 gemäß der ersten Ausführungsform. Das Fördersystem 10 gemäß der zweiten Ausführungsform unterscheidet sich jedoch von dem der ersten Ausführungsform darin, dass die erste Fördereinheit 12a nur ein aktiv angetriebenes Fördermittel 18 aufweist, wohingegen das zweite Fördermittel 18 nicht angetrieben und somit passiv ist. In dem vorliegenden Ausführungsbeispiel ist das zweite Fördermittel 18 in Form einer Führungsschiene ausgebildet, entlang welcher die zu fördernden Bauteile 14 geführt werden.

Das Fördersystem 10 gemäß der zweiten Ausführungsform unterscheidet sich außerdem darin, dass die zweite Fördereinheit 12b lediglich durch ein Fördermittel 18 gebildet ist.

Zwischen der ersten Fördereinheit 12a und der zweiten Fördereinheit 12b ist eine Rutsche 50 ausgebildet, welche zur Überführung der zu fördernden Bauteile 14 von der ersten Fördereinheit 12a zu der zweiten Fördereinheit 12b dient. Die Rutsche 50 ist dabei derart verdreht, dass sie einen Übergang zwischen dem geneigten ersten Führungsmittel 18 der ersten Fördereinheit 12a und dem horizontal ausgerichteten Führungsmittel 18 der zweiten Fördereinheit 12b ermöglicht. Alternativ sind auch weitere Möglichkeiten denkbar, um Bauteile in eine korrekte Ausrichtung zu bringen.

Gleichwohl in Fig. 4 nicht gezeigt, kann das Fördersystem 10 gemäß der zweiten Ausführungsform ebenfalls einen Sensor sowie eine Aussortiereinheit zur Aussortierung nicht korrekt ausgerichteter Bauteile 14 umfassen.

Das Fördersystem 10 gemäß der zweiten Ausführungsform wird im vorliegenden Ausführungsbeispiel dazu verwendet, um Deckel 14 einer Verpackung, genauer gesagt Stöpsel 14 für Brausetablettenröhrchen, lagerichtig zu fördern. Die Stöpsel 14 weisen wie die Verbindungsmittel 14 einen Schaft und einen diesbezüglich verbreiterten Kopf auf, wobei der Kopf der Stöpsel 14 für gewöhnlich schwerer ist als der Schaft.

Aufgrund des höheren Gewichts des Kopfes des Stöpsels 14 sowie der V-förmigen Ausrichtung der Förderflächen 16 des ersten und zweiten Fördermittels 18 der ersten Fördereinheit 12a rutschen die seitlich mittels des Steigförderers 40 zu der ersten Fördereinheit 12a zugeführten Stöpsel 14 mit ihrem Kopf voran zwischen die V-förmig ausgerichteten Förderflächen 16 der Fördermittel 18 der ersten Fördereinheit 12a. Dabei gelangen eine Stirnfläche des Kopfes auf der Förderfläche 16 des ersten Fördermittels 18 und eine Seitenfläche des Kopfes an der Förderfläche 16 des zweiten Fördermittels 18 zur Anlage, wodurch die Stöpsel 14 eine lagerichtige Ausrichtung einnehmen. Grundsätzlich kann die erste Fördereinheit 12a des Fördersystems 10 gemäß der zweiten Ausführungsform auch ein angetriebenes, aktives zweites Fördermittel 18 aufweisen, mittels dessen Antrieb 22 das zweite Fördermittel 18 in der zur Förderrichtung P entgegengesetzten Richtung bewegbar ist. Hierdurch kann die Anzahl lagerichtig ausgerichteter Stöpsel 14 zusätzlich erhöht werden.

Ein Verfahren zur lagerichtigen Förderung der Bauteile 14 gestaltet sich wie folgt. Zunächst wird ein Bauteil 14 mittels eines Fördermechanismus 40, wie zum Beispiel eines Stufenförderers oder Steigförderers, zu der ersten Fördereinheit 12a zugeführt. Dort bewirkt die V-förmige Ausrichtung der Förderflächen 16 der Fördermittel 18 der ersten Fördereinheit 12a, dass das zugeführte Bauteil 14 eine energetisch günstige Position zwischen den Fördermitteln 18 einnimmt, indem ein erster Abschnitt des Bauteils 14 mit der Förderfläche 16 des ersten Fördermittels 18 und ein zweiter Abschnitt des Bauteils 14 mit einer Förderfläche 16 des zweiten Fördermittels 18 zur Anlage gelangt. Durch Antreiben zumindest des ersten Fördermittels 18, bewegt sich dessen Förderfläche 16 in Förderrichtung P, wodurch das Bauteil 14 ebenfalls in Förderrichtung P gefördert wird.

Idealerweise ist dabei das Bauteil 14 bereits lagerichtig ausgerichtet. Sofern das Bauteil 14 noch nicht lagerichtig ausgerichtet sein sollte, lässt sich durch eine zur Förderrichtung P gegenläufige Bewegung der Förderfläche 16 des zweiten Fördermittels 18 das nicht lagerichtig ausgerichtete Bauteil 14 mittels einer Scherbewegung in eine energetisch günstige Position überführen. Es versteht sich, dass das zweite Fördermittel 18 dazu ausgebildet sein sollte, in eine zur Förderrichtung P entgegengesetzten Richtung bewegt zu werden oder mit einer zu der Geschwindigkeit des ersten Fördermittels 18 unterschiedlichen Geschwindigkeit bewegt zu werden.

Führt auch die Scherbewegung nicht zu einer lagerichtigen Ausrichtung des Bauteils 14, so kann ein derartiger Zustand von dem Sensor 42 erkannt werden und das inkorrekt ausgerichtete Bauteil 14 mittels der Aussortiereinheit 44 aussortiert und dem Vorratsbehältnis 38 für eine erneute Zuführung zu der ersten Fördereinheit 12a zugeführt werden.

Im Idealfall erreichen nur lagerichtig ausgerichtete Bauteile 14 die zweite Fördereinheit 12b, welche die lagerichtig ausgerichteten Bauteile 14 zu ihrem Bestimmungsort oder einer weiteren Fördereinheit fördert.

### Bezugszeichenliste

- 10: Fördersystem
- 12a, 12b: Fördereinheit
- 14: Bauteil, Verbindungsmittel, Stöpsel
- 16: Förderfläche
- 18: Fördermittel
- 20: Spalt
- 22: Antrieb
- 24: Antriebswelle
- 26: Antriebskopf
- 28: Führungsschlitz
- 30: Befestigungselement
- 31: Unterbau
- 32: Führungsmittel
- 34: Führungsrollen
- 36: Fortsatz
- 38: Vorratsbehältnis
- 40: Zuführmechanismus
- 41: Schiebeplatten
- 42: Sensor
- 44: Aussortiereinheit
- 46: Führungsbahn
- 48: Vereinzelungseinheit
- 50: Rutsche

- P: Förderrichtung

## Patentansprüche

1. Fördereinheit (12a) zur lagerichtigen Förderung eines Bauteils (14), insbesondere eines Verbindungsmittels (14), wobei die Fördereinheit (12a) ein erstes Fördermittel (18) und ein zu dem ersten Fördermittel (18) separates zweites Fördermittel (18) umfasst, welche sich jeweils zumindest annähernd parallel zueinander in einer Förderrichtung (P) der Fördereinheit (12a) erstrecken und welche jeweils eine Förderfläche (16) zur Auflage eines Abschnitts des Bauteils (14) aufweisen, wobei die Förderfläche (16) des ersten Fördermittels (18) und die Förderfläche (16) des zweiten Fördermittels (18) in Förderrichtung (P) gesehen unter einem vorbestimmten Winkel V-förmig zueinander ausgerichtet sind, und
wobei die Fördereinheit (12a) einen Antrieb (22) umfasst, welcher dazu ausgebildet ist, zur Förderung des Bauteils (14) zumindest das erste Fördermittel (18) ohne Richtungsänderung in Förderrichtung (P) zu bewegen, und wobei das zweite Fördermittel (18), insbesondere zur lagerichtigen Ausrichtung des Bauteils (14), für ein Zeitintervall in einer zu der Förderrichtung (P) entgegengesetzten Richtung und/oder mit einer zu der Geschwindigkeit des ersten Fördermittels (18) unterschiedlichen Geschwindigkeit antreibbar ist.

2. Fördereinheit (12a) nach Anspruch 1,
**dadurch gekennzeichnet,**
**dass** der Antrieb (22) des ersten Fördermittels dazu ausgebildet ist, auch das zweite Fördermittel (18), insbesondere zur lagerichtigen Ausrichtung des Bauteils (14), für ein Zeitintervall in einer zu der Förderrichtung (P) entgegengesetzten Richtung und/oder mit einer zu der Geschwindigkeit des ersten Fördermittels (18) unterschiedlichen Geschwindigkeit zu bewegen, oder
**dass** ein dem ersten Fördermittel (18) zugeordneter Antrieb (22) dazu ausgebildet ist, zur Förderung des Bauteils (14) zumindest das erste Fördermittel (18) ohne Richtungsänderung in Förderrichtung (P) zu bewegen, und ein dem zweiten Fördermittel (18) zugeordneter Antrieb (22) dazu ausgebildet ist, das zweite Fördermittel (18), insbesondere zur lagerichtigen Ausrichtung des Bauteils (14), für ein Zeitintervall in einer zu der Förderrichtung (P) entgegengesetzten Richtung und/oder mit einer zu der Geschwindigkeit des ersten Fördermittels (18) unterschiedlichen Geschwindigkeit zu bewegen.

3. Fördereinheit (12a) nach Anspruch 1 oder 2,
**dadurch gekennzeichnet,**
**dass** dem ersten Fördermittel (18) und dem zweiten Fördermittel (18) jeweils ein eigener Antrieb (22) zugeordnet ist, insbesondere wobei der Antrieb (22) des ersten Fördermittels (18) und der Antrieb (22) des zweiten Fördermittels (18) zumindest annähernd miteinander synchronisiert sind, und/oder
**dass** der Antrieb (22) des zweiten Fördermittels (18) dazu ausgebildet ist, zur Förderung des Bauteils (14) das zweite Fördermittel (18) ohne Richtungsänderung in Förderrichtung (P) zu bewegen.

4. Fördereinheit (12a) nach zumindest einem der vorstehenden Ansprüche, **dadurch gekennzeichnet,**
**dass** mindestens eines der Fördermittel (18) ein Förderband, insbesondere ein Endlosförderband, eine Förderkette, mindestens eine Rolle oder Walze, ein Luftkissen oder ein magnetisches Wanderfeld umfasst und/oder dass das Fördermittel (18) als Förderband, insbesondere Endlosförderband, oder Förderkette ausgebildet ist und auf einer von der Förderfläche (16) abgewandten Innenseite ein Führungsmittel (32) zur Führung, insbesondere zur seitlichen Führung, des Fördermittels (18) aufweist.

5. Fördereinheit (12a) nach zumindest einem der vorstehenden Ansprüche, **dadurch gekennzeichnet,**
**dass** die Förderfläche (16) des ersten Fördermittels (18) und die Förderfläche (16) des zweiten Fördermittels (18) unterschiedliche Oberflächenbeschaffenheiten aufweisen, insbesondere wobei die Förderfläche (16) des ersten Fördermittels (18) und die Förderfläche (16) des zweiten Fördermittels (18) unterschiedlich strukturiert oder unterschiedlich rau sind und/oder wobei das erste Fördermittel (18) und das zweite Fördermittel (18) aus unterschiedlichen, insbesondere unterschiedlich weichen, Materialien bestehen, insbesondere wobei das Material des ersten Fördermittels (18) und das Material des zweiten Fördermittels (18) unterschiedliche Reibungskoeffizienten bezüglich des Materials des zu fördernden Bauteils (14) aufweisen.

6. Fördereinheit (12a) nach zumindest einem der vorstehenden Ansprüche, **dadurch gekennzeichnet,**
**dass** ein Winkeleinstellmittel zum, insbesondere variablen, Einstellen des Winkels zwischen der Förderfläche (16) des ersten Fördermittels (18) und der Förderfläche (16) des zweiten Fördermittels (18) vorgesehen ist, und/oder
**dass** zwischen dem ersten Fördermittel (18) und dem zweiten Fördermittel (18) ein sich in Förderrichtung (P) erstreckender Spalt (20) ausgebildet ist, insbesondere wobei ein Abstandseinstellmittel zum Einstellen einer Breite des Spaltes (20) zwischen dem ersten Fördermittel (18) und dem zweiten Fördermittel (18) vorgesehen ist.

7. Fördereinheit (12a) nach zumindest einem der vorstehenden Ansprüche, **dadurch gekennzeichnet,**
**dass** ein Sensor (42) zur Erfassung einer, insbesondere korrekten, Ausrichtung eines Bauteils (14) vorgesehen ist, insbesondere wobei der Sensor (42) mit einer Aussortiereinheit (44) zur Aussortierung von nicht korrekt ausgerichteten Bauteilen (14) gekoppelt ist.

8. Fördersystem (10) mit mindestens einer ersten Fördereinheit (12a) nach zumindest einem der vorstehenden Ansprüche 1 bis 7 und mindestens einer in Förderrichtung (P) nach der ersten Fördereinheit (12a) angeordneten zweiten Fördereinheit (12b), welche mindestens ein eine Förderfläche (16) aufweisendes Fördermittel (18) umfasst.

9. Fördersystem (10) nach Anspruch 8,
**dadurch gekennzeichnet,**
**dass** die zweite Fördereinheit (12b) wie die erste Fördereinheit (12a) V-förmig angeordnete Fördermittel (18) aufweist und insbesondere gemäß einem der Ansprüche 1 bis 7 ausgebildet ist, und wobei die Förderflächen (16) des ersten Fördermittels (18) und des zweiten Fördermittels (18) der zweiten Fördereinheit (12b) in Förderrichtung (P) gesehen unter zumindest annähernd dem gleichen oder einem unterschiedlichen, insbesondere größeren, Winkel zueinander angeordnet sind wie der Winkel zwischen den Förderflächen (16) der Fördermittel (18) der ersten Fördereinheit (12a).

10. Fördersystem (10) nach Anspruch 8,
**dadurch gekennzeichnet,**
**dass** die Förderflächen (16) der Fördermittel (18) der zweiten Fördereinheit (12b) anders als die Förderflächen (16) der Fördermittel (18) der ersten Fördereinheit (12a) in einer gemeinsamen Ebene zumindest annähernd koplanar zueinander angeordnet sind.

11. Fördersystem (10) nach zumindest einem der Ansprüche 8 bis 10,
**gekennzeichnet durch**
ein Steuermodul zur Steuerung eines Antriebs (22) der zweiten Fördereinheit (12b) in Abhängigkeit von einem Antrieb (22) der ersten Fördereinheit (12a).

12. Verwendung einer Fördereinheit (12a) oder eines Fördersystems (10) nach zumindest einem der vorherigen Ansprüche zur Förderung eines, insbesondere einen Schaft und einen bezüglich des Schaftes verbreiterten Kopf aufweisenden, Bauteils (14), insbesondere Verbindungsmittels (14).

13. Verfahren zur lagerichtigen Förderung eines Bauteils (14) mittels einer Fördereinheit (12a), insbesondere nach zumindest einem der Ansprüche 1 bis 7, wobei das Verfahren die folgenden Schritte umfasst:
- Zuführung des Bauteils (14) zu der Fördereinheit (12a), wobei das Bauteil (14) eine energetisch günstige Position einnimmt, indem ein erster Abschnitt des Bauteils (14) mit einer Förderfläche (16) eines ersten Fördermittels (18) der Fördereinheit (12a) und ein zweiter Abschnitt des Bauteils (14) mit einer Förderfläche (16) eines zweiten Fördermittels (18) der Fördereinheit (12a) zur Anlage gelangt,
- Förderung des Bauteils (14) in Förderrichtung (P) durch Antreiben zumindest des ersten Fördermittels (18) mittels eines Antriebs (22), und
- wobei das erste Fördermittel (18) in Förderrichtung (P) angetrieben wird und das zweite Fördermittel (18) zeitweise in einer Richtung entgegengesetzt zur Förderrichtung (P) und/oder mit einer zu der Geschwindigkeit des ersten Fördermittels (18) unterschiedlichen Geschwindigkeit angetrieben wird, um ein noch nicht lagerichtig ausgerichtetes Bauteil (14) lagerichtig auszurichten.

14. Verfahren nach Anspruch 13,
**dadurch gekennzeichnet,**
**dass** die Zuführung des Bauteils zu der Fördereinheit (12a) mittels eines Steigförderers, insbesondere Stufenförderers, bewirkt wird.

15. Verfahren nach einem der vorstehenden Ansprüche 13 oder 14,
**dadurch gekennzeichnet,**
**dass** das zu fördernde Bauteil ein Verbindungsmittel, insbesondere eine Schraube, oder ein Deckel einer Verpackung, insbesondere ein Stöpsel einer Brausetablettenröhre, ist.
